# EUROPEAN PATENT SPECIFICATION

(11) **EP 0 442 297 B1**
(45) Date of publication and mention of the grant of the patent: **24.05.2000**
(21) Application number: 91100838.1
(22) Date of filing: 23.01.1991
(51) Int. Cl.: G06F 9/22, G06F 9/24

(54) **Processor with an overwriteable microcode memory**
Prozessor mit überschreibbarem Mikrokodespeicher
Processeur à mémoire de microcode réinscriptible

(30) Priority: 24.01.1990 JP 1406290; 24.01.1990 JP 1406390
(43) Date of publication of application: 21.08.1991
(73) Proprietor: SONY CORPORATION, Tokyo (JP)
(72) Inventor: Yasuda, Hiroyuki, Shinagawa-ku Tokyo (JP); Sawada, Yoshiaki, Shinagawa-ku Tokyo (JP); Maegawa, Hirotoshi, Shinagawa-ku Tokyo (JP)
(74) Representative: Müller, Frithjof E., Dipl.-Ing.

(56) References cited:
- US-A- 3 800 291
- US-A- 4 181 935
- US-A- 4 747 044
- US-A- 4 761 733
- IBM TECHNICAL DISCLOSURE BULLETIN. vol. 29, no. 12 , May 1987 , NEW YORK US pages 5334 - 5337 'Microcode transparent virtual control store addressing'

## Description

### BACKGROUND OF THE INVENTION

### Field of the Invention

This invention relates to a microprogram control type processor in which overwritable memory means having an stored micro-code is provided within the processor.

### Prior Art

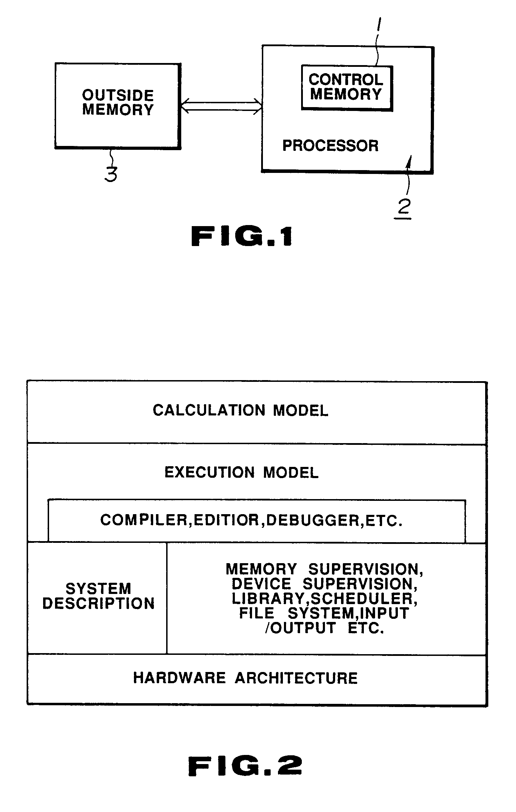

In a microprogram control type processor in general, a control memory 1 having a stored micro-code is accommodated in the inside of the processor 2, as shown in Fig. 1. The processor 2 interprets and executes the user program on an external memory 3 in accordance with the micro-code stored in the control memory 1.

The control memory enclosed in the processor is usually of the read-only-type in which a memory having a pre-programmed micro-code wherein is built into the processor.

There is also known a method in which, with a view to high speed execution of the user program, the control memory enclosed in the processor is adapted to be read out or written from outside and the user program is directly loaded into the control memory for execution.

Meanwhile, in implementing a calculation model, such as a function type or object-oriented model, or a higher level calculation tool, on an electronic computer, an execution model, such as languages or so-called frameworks, is necessitated.

The architecture of the present-day electronic computer is the so-called von Neumann architecture. That is, underlying the present-day computer architecture are the data, storage locations for data, a processor and data processing on the processor. For realizing the execution model on such architecture, not only the processing indicated on the execution model but also the memory or device supervision need to be processed by the processor.

While the execution model is determined by its calculation model in consideration of the architecture, system description of, for example, memory supervision, device supervision, library, scheduler, file system or input/output on the architecture is necessitated for implementing the execution model, as shown for example in Fig. 2. This system description includes processing which cannot be seen directly from the execution model, such as secondary memory supervision, supervision of the calculation process or allocation of the processor or CPU to the various processes. The result is that the compatibility between the execution model and the architecture has been improved in general.

For example, assuming that, in the system shown in Fig. 1, a data base A and a data base B are stored in an outside memory 3 as the place for data storage, and that it is to be determined if the data base A and the data base B are or are not the same data base, the processor 2 sequentially reads and compares the data base A and the data base B, as it controls or supervises the memory, main storage device or a secondary storage device, for giving a judgment on whether the data base A is the same as the data base B from the results of comparison.

With such architecture, since the system description on the architecture is not necessarily concise, the actual system operation cannot be recognized or predicted in detail with ease when implementing the execution model or making a description or programming on the execution model. The result is that an unexpected hindrance is apt to be produced at the time of, for example, memory accessing.

Although the use of dedicated machines or functional memories may be envisaged to improve the compatibility between the execution model and the architecture, a method based on a framing which will give fundamentals for calculation on a large number of execution models is desired for realizing a universal architecture.

Meanwhile, with a microprogram controlled processor, a control memory which permits reading and writing from outside may be stored in the processor to enable speed execution of the user program. However, a large size program cannot be executed immediately because the larger capacity of the storage capacity of the control memory cannot be realized. Thus, when executing a large size program or executing a plurality of programs time-divisionally it becomes necessary to make program switching with outside, as a result of which the execution efficiency may be drastically lowered.

Prior art document US-A-4,747,044 relates to direct execution of software on microprogrammable hardware and describes a data processing system including a main memory unit and an address translation chip which accepts virtual memory addresses from a central processing chip and translates these virtual memory addresses to real memory addresses for storing data in and fetching data from the main memory unit at the real addresses.

### Object and Summary of the Invention

It is an object of the present invention to provide a microprogram controlled processor whereby the user program may be executed at an elevated speed and the execution efficiency may be improved.

It is another object of the present invention to provide an information processing apparatus whereby the compatibility between the execution model and the architecture level may be improved, a more abstract architecture than the conventional architecture may be obtained and thereby a program which is more efficient and more conscious of the computer behavior may be formulated in the implementation of the execution model or in the description of the execution model.

To solve these objects, the present invention provides a microprogram control type processor as specified in claim 1 and an information processing apparatus as specified in claim 2.

With the processor of the present invention, the relation of coordination between the address in the real memory space inclusive of an overwritable memory means with the stored microcode and the address information of a virtual memory space designated by setting means is indicated by conversion table means for virtualizing the real memory space inclusive of the overwritable memory means with the stored microcode, and the program by the microcode arranged in the virtual address space is executed.

With the information processing apparatus of the present invention, the basic elements of the calculation on an execution model are resources and evaluation of the architecture module and the calculation on the execution model is implemented as the evaluation of the resources.

### Brief Description of the Drawings

Fig. 1 is a block diagram showing a basic structure of a conventional processor.
Fig. 2 shows an architecture of a conventional information processing apparatus.
Fig. 3 is a block diagram showing the essential construction of a processor according to the present invention.
Fig. 4 shows the contents of a virtual address space in the processor shown in Fig. 3.
Fig. 5 shows the contents of a virtual address information generated by a program counter in the processor shown in Fig. 3.
Fig. 6 shows the relation of coordination between the physical address space and the virtual address space in the processor shown in Fig. 3.

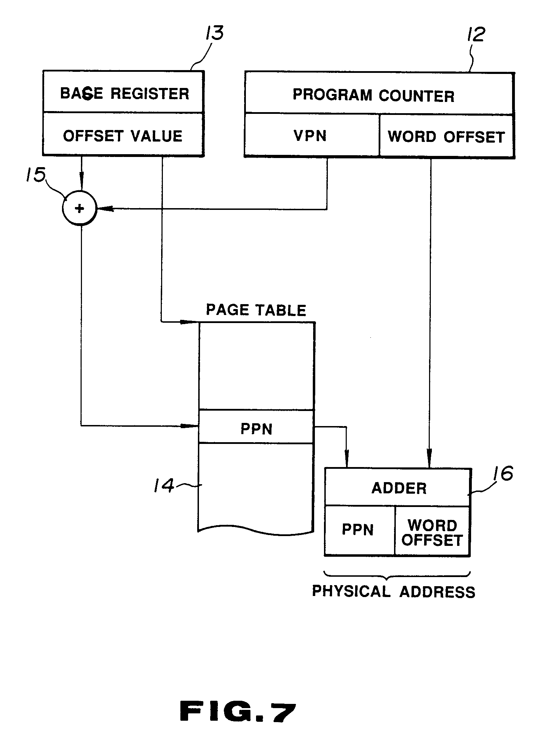

Fig. 7 is a diagrammatic view for illustrating the address conversion between the virtual address and the physical address in the processor shown in Fig. 3.
Fig. 8 shows the basic structure of an information processing apparatus according to the present invention.
Fig. 9 is a diagrammatic view for illustrating the operation of the information processing apparatus shown in Fig. 8.
Fig. 10 shows a detailed construction of a storage.
Fig. 11 shows a detailed construction of an evaluation unit.
Fig. 12 shows the structure of a co-owned system.
Fig. 13 shows the structure of a distributed system.

### Description of Preferred embodiment

By referring to the drawings, an illustrative embodiment of the processor according to the present invention will be explained in detail.

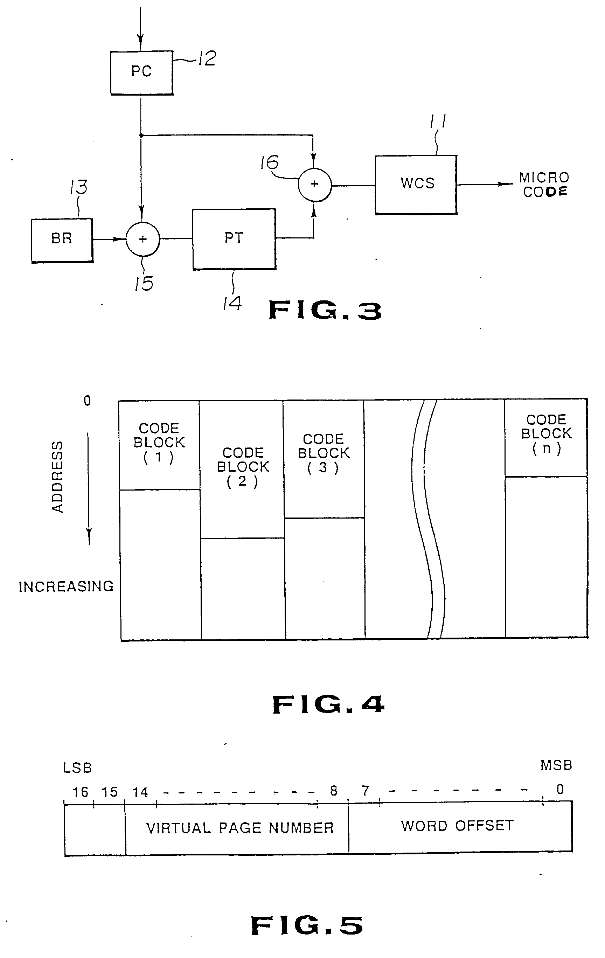

Referring first to Fig. 3, the processor according to the present invention is of the microprogram control system of the type in which a rewritable or overwritable control memory 11 accommodating a micro-code therein is provided within the processor, as shown in Fig. 3. The addresses, that is the physical addresses, of the control memory 11, are generated from the virtual address information generated by a program counter 12 by means of, for example, a page register 13, page table 14 and adders 15, 16, in a manner which will be explained subsequently.

With the present embodiment, a group of codes for performing a set of processing operations is termed a code block and a virtual address space is allocated to each code block. As shown in Fig. 4, each code block has a zero-address in common and a sufficiently large virtual address space.

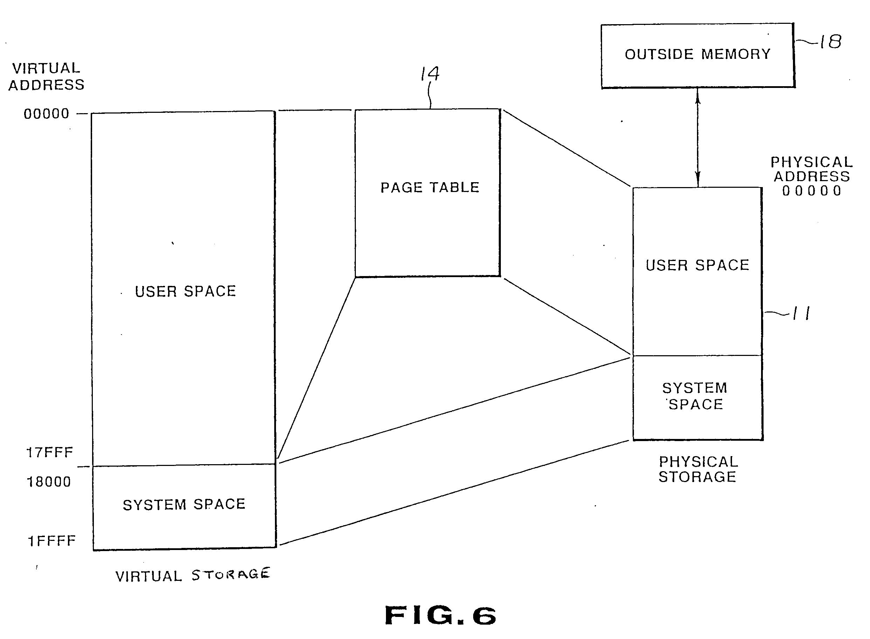

The program counter 12 generates a 17-bit virtual address information for having reference to the micro-code stored in the control memory 11. The 17-bit virtual address information, generated by program counter 12, is shown in Fig. 5, and constituted by upper 7 bits (16th to 8th bits) allocated to a virtual page number (VPN) for each of 256-word pages dividing the virtual address space, and lower 8 bits allocated to word offsets within each page. Referring to Fig. 6, the address space with upper two "1, 1" bits (16th and 15th bits) is used as the system space, and the remaining address space is used as the user space.

The base register 13 is a register for setting a physical base address (PBA) of the page table entry of the user space which is currently in use. The offset value BR with respect to the page table entry in which the data of the block of the code which is being executed is entered into the base register.

The page table 14 is a conversion table for address conversion from the virtual address into the physical address. The physical page number (PPN) of the control memory 11 is entered as the page table entry into this conversion table. This page table entry is used only for address conversion of the user space. The physical page number PPN is the page number of the physical address space and takes the value of from 0 to 511.

With the present embodiment, the address of the page table 14 is represented by the sum at an adder 15 of the virtual page number VPN given by the upper nine bits of the virtual address information generated by the program counter 12 and the offset value BR of the page table entry supplied by the base register 13, or (BR + VPN). The physical page number PPN, read out from the control memory 11, that is the page table entry stored in the storage location of the page table 14 designated by the address value (BR + VPN) obtained as the addition output of the adder 15, is added by an adder 16 to the word offset indicated by the lower eight bits of the virtual address information generated by the program counter 12, for generating the physical address.

Meanwhile, the page table entry with the physical page number PPN equal to zero means that the corresponding virtual address space is not mapped in the physical page. When the area is accessed, a page fault is produced, and the necessary code block is loaded from an external backup memory 18 into the control memory 11. Both of the control memory 11 and the page table 14 are the memories in which data can be overwritten from outside. the processor informs the outside of the operating state of these memories by interrupt or the like means.

With the processor of the present embodiment, the address space of the control memory 11 is virtualized and the micro-code describing the desired user program is stored virtually and executed. With the present processor, since the address space as seen from the processor is virtually enlarged, the large size program which it has been difficult to execute with the conventional microprogram controlled processor can now be executed easily. By virtualizing the address space of the control memory 11, the program can be located as desired without being restricted by the physical address. Therefore, when plural programs are executed time-divisionally, these programs can be stored virtually and switched without outside accessing thereby improving the execution efficiency.

Meanwhile, when a virtual space is afforded to the code section (the software defined by the microcode) in its entirety in which the contents, magnitude and the number are changed dynamically, the virtual address space which has been continuous at a given time becomes discontinuous after time t to complicate the supervision of the virtual address space, while the page table for supervising the virtual address space is increased to lower the utilization efficiency of the virtual address space. This inconvenience may be avoided with the present embodiment in which the virtual address space is allocated to each code block as a unit.

With the above described processor of the present invention, since the address space as viewed from the processor is virtually enlarged by virtualizing the address space of the control memory, the large size program, which it has been difficult to execute with the conventional microprogram controlled processor, can be executed easily.

Since the program is allocated in the virtual address space, it can be allocated with a degree of freedom. Therefore, in an environment in which various programs are executed time-divisionally, program switching can be made without being limited by the physical addresses. In this manner, accessing to the outside may be reduced for improving the execution efficiency.

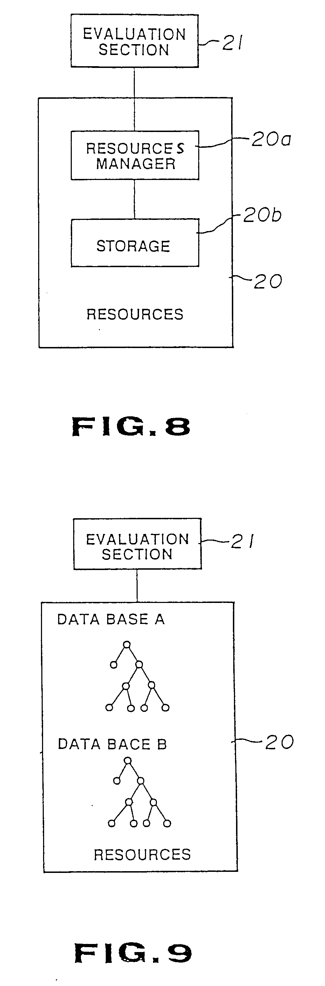

An embodiment of an information processing apparatus, constructed by using the above described microprogram system processor, is explained by referring to the drawings. Fig. 8 shows the basic structure of the information processing apparatus.

In this figure, the information processing apparatus is constituted by resources or resource holding unit 20, which is made up of a resource manager 20a and a storage 20b and an evaluation unit 21.

The resource manager 20a of the resource holding unit 20 is a controlling and supervising unit for implementing the resource holding unit 20 with the use of devices such as conventional computer memory or secondary storage unit, or an interface. The resources herein mean data and calculation units on the calculation model such as function or object oriented model, or an execution model for implementing a higher level calculation tool on an electronic computer, wherein the calculation units are the memory supervision, device supervision, process supervision, task supervision or communication function. Thus the resource holding unit 20 is constituted by the storage 20b as the data storage location and the resource manager 20a which is the communication mechanism or the data supervising mechanism.

The evaluation unit 21 executes evaluation of the resource holding unit 20. The evaluation herein means the process of executing the calculation on the execution model.

That is, the resource holding unit 20 is the static expression of the data or the processing units on the execution model. Although the processing for supervision of the resource holding unit 20 is executed within the resource holding unit 20, such processing is not seen positively from the evaluating unit 21. The evaluating unit 21 is the dynamic behavior of the resource holding unit 20 on the execution model and provides apparent changes in the resource holding unit 20. Such behavior or changes are obtained by mechanical processing for evaluation.

Thus, with the present embodiment, the resource holding unit 20 is used as means for holding the data or calculation units on the execution model as resources, whereas the evaluating unit 21 is used as means for executing the evaluation as the dynamic behavior or apparent changes of the resource holding unit 20 on the execution model.

In operation, the calculation units, such as process or task, are stored in the storage 20b of the resource holding unit 20. The resource manager 20a transmits the calculation units, such as the process, to the evaluation unit 21.

In the evaluation unit 21, calculation is carried out in accordance with the instructions of the calculation units. When the evaluation unit 21 is in need of data stored in the resources, storage of new data or calculation units in the resource holding unit 20 or communication with outside, the evaluation unit 21 issues these demands to the resource manager 20a of the resource holding unit 20. The resource manager 20a executes the necessary processing. That is, the resource manager 20a executes communication or processing of data stored in storage 20b and transmits the result (data) to the evaluation unit 21, which in turn executes calculation using the information from the resource holding unit 20. Meanwhile, the resource manager 20a also executes the virtual memory supervision or garbage collection.

In this manner, it is the resource manager 20a that executes the detailed procedure or processing of the communication or data processing on the resource holding unit 20, while the evaluation unit 21 is not aware of such processing. Thus the overall processing on the system is more abstract and the descriptiveness on the system becomes higher than in the case wherein the process is executed by the process corresponding to that performed by the conventional evaluation unit 21. On the other hand, the evaluation unit 21 may perform any other calculation when the resource manager 20a is performing the processing for resources.

If, during execution of a calculation in the evaluation unit 21, it becomes necessary to determine whether or not the data base A and the data base B stored in the holding unit 20 are identical with each other, the evaluation unit 11 issues to the resource holding unit 20 instructions for determining whether or not the data base A and the data base B are identical with each other. The resource holding unit 20 compares the data base A and the data base B stored in the resource holding unit 20 and transmits the result of comparison (data) to the evaluation unit 21. While the resource holding unit 20 is engaged in comparison between data base A and data base B, the evaluation unit 21 is executing any other processing.

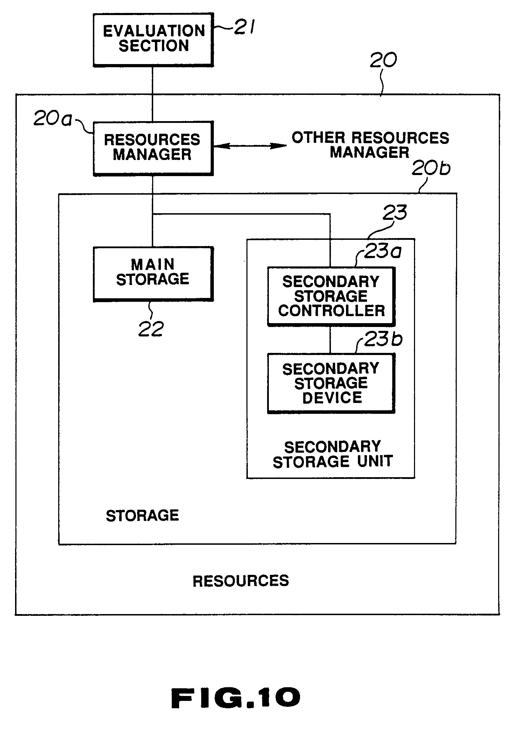

Fig. 10 shows the storage 20b of the resource holding unit 20 implemented by employing the hierarchical memory device constituted by the main memory and the secondary memory employed in conventional electronic computers.

Referring to Fig. 10, the data recorded on the secondary memory device 23b, such as a magnetic disc, are transferred to and stored in the main memory 22 under control of a secondary memory controller 23a. The resource manager 20a generates the information necessitated by the evaluation unit 21 with the use of the stored data and transmits the information to the evaluation unit 21.

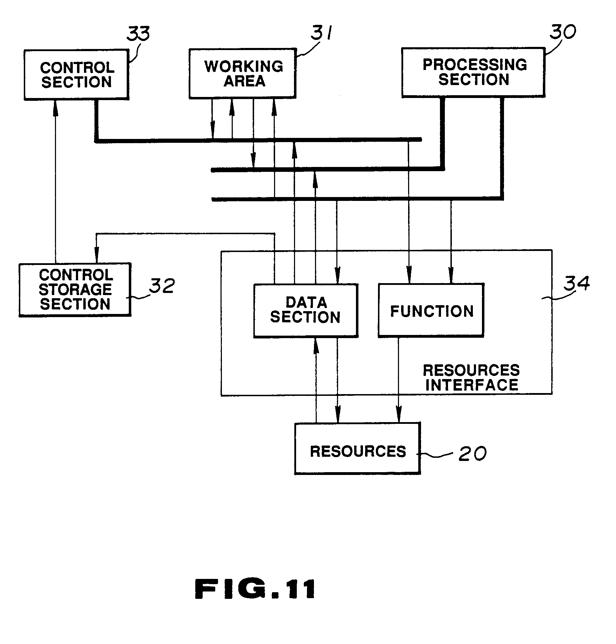

Fig. 11 shows the detailed structure of the evaluation unit 21.

In this figure, a processing unit 30 executes data processing with the use of a working area 31. A control storage section 32 stores the method of evaluation from the resource holding section 20. A control section 33 controls the evaluation section 21 itself and a resource interface 34 on the basis of the method of evaluation stored in the control storage section 32. A data section 34a of the resource interface 34 executes data exchange with the resource holding section 20 while giving instructions concerning the behavior of the resource holding section 20. Although the above mentioned method of evaluation is stored as the program in the resource holding section 20, the basic portion or all of the method of evaluation may also be provided in the evaluation unit 21.

The construction of the present invention, as described above, on the resource manager 20a is substantially the same as that of the evaluation section 21. That is, the resource manager 20a has the construction of the evaluation unit 21 to which are added an interface with other resources 20 and an interface with storage 20b.

According to the calculation model, such as function type or object oriented calculation model, or on an execution model for implementing the upper level calculation model, such as calculation tool, the memory supervision, process supervision, task supervision or communication function, are the unit of calculation, data and the calculation unit are the resources of calculation, the process of executing the calculation on the execution model is the evaluation, the resource holding section 20 holding the resources and the evaluation section 21 are independent of each other to construct an architecture in which the calculation on an execution model is realized with evaluation of the resources, and the information necessary for evaluation is outputted in response to a demand from the evaluation section 21 which executes the evaluation of the resources as the dynamic behavior or apparent changes of the resource holding section 20 the execution model for improving the compatibility between the execution model and the architecture.

On the other hand, a more abstract architecture than the conventional architecture may be obtained and an efficient program which is more conscious of the computer behavior may be formulated in the implementation of the execution model or in the description (programming) on the execution model. In addition, implementation of the execution model or description on the execution model may be made on the basis of the architecture.

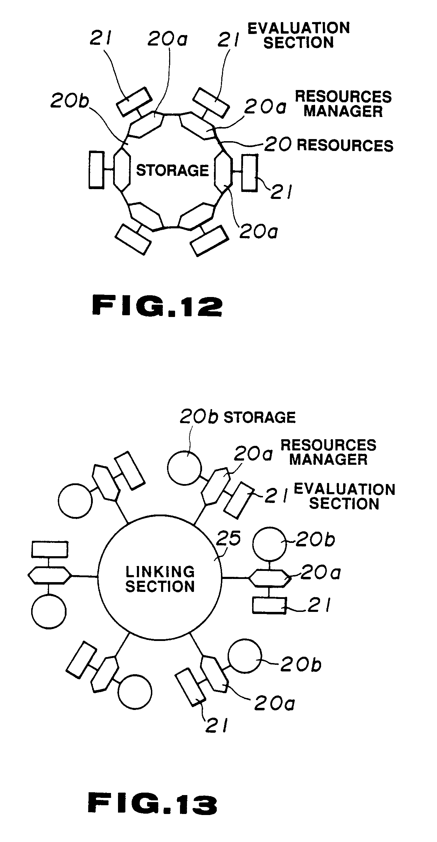

The present invention is not limited to the above embodiment. For example, considering the linking between the resources 20 and the evaluator, the linking counterpart may be regarded as the resources 20, the linking of the resources 20, that is the linking of the resource managers 20a, results in a parallel or distributed system. For example, a co-owned system as shown for example in Fig. 12 may be implemented with the storage 20b co-owned by the resource managers 20a, whereas the distributed system shown in Fig. 13 may be implemented by interlinking the resource managers 20a by a linking section 25. Thus the present invention facilitates constructing a high performance computer system, such as parallel or dispersed system.

It will be seen from above that, in accordance with the present invention, the compatibility between the execution model and the architecture may be improved by implementing the mechanism of evaluation and the resources on the architecture level, with the data, memory supervision, process supervision and the communication function as the resources of calculation and with the process of execution of the calculation on the resources as the evaluation. System description for implementing the execution model or description on the execution model may be realized on the basis of the architecture. The result is that a more abstract architecture than the conventional architecture may be obtained and a more efficient program more conscious of the computer behavior may be formulated. In addition, a computer system with a higher function may be realized.

## Claims

1. A microprogram control type processor having stored overwritable memory means (11) therein for microcode storage, comprising:
- setting means (12) for setting a virtual memory space, and
- conversion table means (14) showing the relation of coordination between the address information of the virtual memory space designated by said setting means (12) and the address in a real memory space inclusive of said memory means (11),
- wherein a predetermined address in said virtual memory space is designated to read out data,
characterized in that
- the contents of said conversion table means (14) may be modified by adding a virtual page number (VPN) given by said setting means (12) and an offset value (BR) supplied by a base register (13).

2. An information processing apparatus comprising
- resource holding means (20) for holding data (20b) and management programs (20a) for controlling and supervising said data according to an object oriented execution model specifying holding of resources on a high description level;
- evaluating means (21) for evaluating the dynamic behaviour of the resources or apparent changes of the resource holding means (20);
**characterized in that**
- said holding means are responsive to information request commands from said evaluating means to supervise said resource data and to deliver to the evaluating means (21) the result of this supervision, and in that
- said supervision is executed by a microprogram control type processor having stored overwritable memory means (11) therein for microcode storage comprising
- setting means (12) for setting a virtual memory space, and
- conversion table means (14) showing the relation of coordination between the address information of the virtual memory space designated by said setting means (12) and the address in a real memory space inclusive of said memory means (11),
- wherein a predetermined address in said virtual memory space is designated to read out data, and
- the contents of said conversion table means (14) may be modified by adding a virtual page number (VPN) given by said setting means (12) and an offset value (BR) supplied by a base register (13).

## Patentansprüche

1. Mikroprogrammgesteuerter Prozessor mit einem darin vorgesehenen überschreibbaren Speichermittel (11) zum Speichern eines Mikrocodes mit:
- einem Einstellmittel (12) zum Einstellen eines virtuellen Speicherraums, und
- einer Umwandlungstabelleneinrichtung (14), welche die Beziehung der Koordinierung zwischen der Adreßinformation des durch das Einstellmittel (12) bestimmten virtuellen Speicherraums und der Adresse im realen Speicherraum einschließlich des Speichermittels (11) darstellt,
- wobei eine vorbestimmte Adresse im virtuellen Speicherraum Auslesedaten zugeordnet ist,
dadurch gekennzeichnet,
- daß der Inhalt der Umwandlungstabelleneinrichtung (14) verändert werden kann durch Hinzufügen einer virtuellen Seitenzahl (VPN), welche durch das Einstellmittel (12) gegeben ist, und eines von einem Basisregister (13) zugeführten Offsetwerts (BR).

2. Informationsverarbeitungsvorrichtung mit
- Resourcen-Haltemittel (20) zum Halten von Daten (20b) und Verwaltungsprogrammen (20a), um die Daten nach einem objektorientierten Ausführungsmodell zu steuern und zu überwachen, durch welches das Halten der Resourcen auf einem hohen Beschreibungsniveau bestimmt wird;
- einem Auswertemittel (21) zum Auswerten des dynamischen Verhaltens der Resourcen oder offensichtlicher Änderungen des Resourcen-Haltemittels (20);
dadurch gekennzeichnet,
- daß die Haltemittel auf Informationsanforderungskommandos der Auswertemittel reagieren, um die Resourcedaten zu überwachen und das Ergebnis dieser Überwachung an die Auswertemittel (21) zu übermitteln, und
- daß die Überwachung von einem mikroprogrammgesteuerten Prozessor mit einem darin vorgesehenen überschreibbaren Speichermittel (11) zum Speichern eines Mikrocodes ausgeführt wird, wobei der Prozessor aufweist:
- ein Einstellmittel (12) zum Einstellen eines virtuellen Speicherraums, und
- eine Umwandlungstabelleneinrichtung (14), welche die Beziehung der Koordinierung zwischen der Adreßinformation des durch das Einstellmittel (12) bestimmten virtuellen Speicherraums und der Adresse im realen Speicherraum einschließlich des Speichermittels (11) darstellt,
- wobei eine vorbestimmte Adresse im virtuellen Speicherraum Auslesedaten zugeordnet ist, und
- wobei der Inhalt der Umwandlungstabelleneinrichtung (14) verändert werden kann durch Hinzufügen einer virtuellen Seitenzahl (VPN), welche durch das Einstellmittel (12) gegeben ist, und eines von einem Basisregister (13) zugeführten Offsetwerts (BR).

## Revendications

1. Processeur du type à commande par microprogramme comportant des moyens de mémoire réinscriptible (11) stockés dans celui-ci en vue de la mémorisation d'un microcode, comprenant :
- un moyen d'initialisation (12) destiné à initialiser un espace de mémoire virtuelle, et
- un moyen de table de conversion (14) indiquant la relation de coordination entre les informations d'adressage et l'espace de mémoire virtuelle désigné par ledit moyen d'initialisation (12) et l'adresse dans un espace de mémoire réelle comprenant lesdits moyens de mémore (11),
- dans lequel une adresse prédéterminée dans ledit espace de mémoire virtuelle est désignée pour lire des données,
caractérisé en ce que
- le contenu dudit moyen de table de conversion (14) peut être modifié en ajoutant un numéro de page virtuelle (VPN) donné par ledit moyen d'initialisation (12) et une valeur de décalage (BR) fournie par un registre de base (13).

2. Dispositif de traitement d'informations comprenant :
- un moyen de conservation de ressources (20) destiné à conserver des données (20b) et des programmes de gestion (20a) afin de commander et de superviser lesdites données conformément à un modèle d'exécution orienté objet spécifiant la conservation des ressources à un niveau de description élevé,
- un moyen d'évaluation (21) destiné à évaluer le comportement dynamique des ressources ou des changements apparents du moyen de conservation de ressources (20),
caractérisé en ce que
- ledit moyen de conservation répond à des ordres de demande d'informations provenant dudit moyen d'évaluation afin de superviser lesdites données de ressources et de délivrer au moyen d'évaluation (21) le résultat de cette supervision, et en ce que
- ladite supervision est exécutée par un processeur du type à commande par microprogramme comportant des moyens de mémoire réinscriptibles (11) stockés dans celui-ci en vue d'une mémorisation de microcode comprenant
- un moyen d'initialisation (12) destiné à initialiser un espace de mémoire virtuelle, et
- un moyen de table de conversion (14) indiquant la relation de coordination entre les informations d'adressage de l'espace de mémoire virtuelle désigné par ledit moyen d'initialisation (12) et l'adresse dans un espace de mémoire réelle comprenant lesdits moyens de mémoire (11),
- dans lequel une adresse prédéterminée dans ledit espace de mémoire virtuelle est désignée pour la lecture des données, et
- le contenu dudit moyen de table de conversion (14) peut être modifié en ajoutant un numéro de page virtuelle (VPN) donné par ledit moyen d'initialisation (12) et une valeur de décalage (BR) fournie par un registre de base (13).
